# EUROPÄISCHE PATENTSCHRIFT

(11) **EP 0 564 930 B1**
(45) Veröffentlichungstag und Bekanntmachung des Hinweises auf die Patenterteilung: **12.02.1997**
(21) Anmeldenummer: 93105081.9
(22) Anmeldetag: 27.03.1993
(51) Int. Cl.: C09B 11/18

(54) **Verfahren zur Herstellung von Di- oder Triarylmethanfarbstoffen**
Method of preparing diaryl or triaryl methane dyes
Procédé de préparation de colorants de la série diarylméthane ou triarylméthane

(30) Priorität: 08.04.1992 DE 4211782
(43) Veröffentlichungstag der Anmeldung: 13.10.1993
(73) Patentinhaber: BASF Aktiengesellschaft, 67063 Ludwigshafen (DE)
(72) Erfinder: Gessner, Thomas, Dr., W-6900 Heidelberg (DE); Mayer, Udo, Dr., W-6710 Frankenthal (DE)

(56) Entgegenhaltungen:
- DD-A- 114 828
- US-A- 4 321 207
- PATENT ABSTRACTS OF JAPAN, Unexamined Applications, C Sektion, Band 2, Nr. 110, 13. September 1978, Seite 2087 C 78
- PATENT ABSTRACTS OF JAPAN, Unexamined Applications, C Sektion, Band5, Nr. 120, 4. August 1981, Seite 97 C 65
- PATENT ABSTRACTS OF JAPAN, Unexamined Applications, C Sektion, Band 14, Nr. 211, 2. Mai 1990, Seite 31 C 715

## Beschreibung

Die vorliegende Erfindung betrifft ein neues Verfahren zur Herstellung von Di- oder Triarylmethanfarbstoffen durch Oxidation von Di- oder Triarylmethanen in Gegenwart eines Verdünnungsmittels und eines Sauerstoff übertragenden Katalysators, der ein komplex gebundenes Schwermetallion enthält, oder eines Katalysators auf Basis von Molybdänsäure und einer VO^{2⊕} -Verbindung.

Aus der JP-A-74 530/1978 ist die Herstellung von Triarylmethanfarbstoffen durch Oxidation von Triarylmethanen mit Wasserstoffperoxid in Gegenwart von Kupfer(II)salzen, z.B. Kupfersulfat oder Kupferchlorid, bekannt. Weiterhin beschreibt die JP-A-57 848/1981 die Durchführung des Oxidationsprozesses mit Wasserstoffperoxid, Chloranil und einer Metallverbindung, z.B. Kupfer(I)bromid oder Vanadium-pentoxid.

Schließlich soll nach der Lehre der JP-A-47 160 (1990) die Oxidation von Carboxylgruppen enthaltenden Triarylmethanen zu Phthaliden mit Wasserstoffperoxid oder Sauerstoff als Oxidationsmittel in Gegenwart einer Eisenverbindung, z.B. Eisenchlorid, Eisensulfat oder Eisenphthalocyanin, sowie zusätzlich einer Manganverbindung, z.B. Braunstein, Manganchlorid oder Mangansulfat, und eines Chelatierungsmittels, z.B. Weinsäure, Gluconsäure oder Ethylendiamintetraessigsäure, erfolgen.

Es hat sich gezeigt, daß die Verfahren des Standes der Technik noch Mängel aufweisen. Beispielsweise sind die genannten Verfahren für die Herstellung von Di- oder Triarylmethanfarbstoffe nicht universell anwendbar.

Aufgabe der vorliegenden Erfindung war es nun, ein neues Verfahren zur Herstellung von Di- oder Triarylmethanfarbstoffen bereitzustellen, das von den entsprechenden Di- oder Triarylmethanen ausgeht und in Gegenwart eines Sauerstoff übertragenden Katalysators, der ein komplex gebundenes Schwermetall enthält, oder eines Katalysators auf Molybdän- und Vanadiumbasis durchgeführt wird. Mittels des neuen Verfahrens sollten die Zielprodukte auf einfache Weise und in guter Ausbeute und hoher Reinheit erhalten werden.

Es wurde nun gefunden, daß die Herstellung von Farbstoffen der Formel I 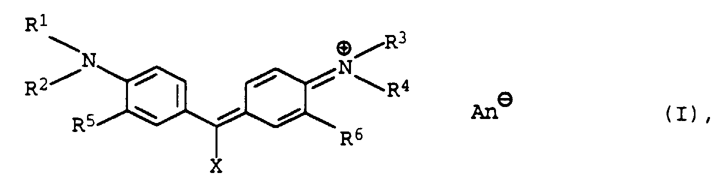 in der
- R¹, R², R³ und R⁴: unabhängig voneinander jeweils C₁-C₈-Alkyl, das gegebenenfalls substituiert ist und durch 1 bis 3 Sauerstoffatome in Etherfunktion unterbrochen sein kann, Phenyl oder C₁-C₄-Alkylphenyl,
- R⁵ und R⁶: unabhängig voneinander jeweils Wasserstoff oder Methyl,
- X: Wasserstoff, gegebenenfalls substituiertes Phenyl oder gegebenenfalls substituiertes Naphthyl und
- An^{⊖}: das Äquivalent eines Anions bedeuten,
durch Oxidation einer Leukoverbindung der Formel II 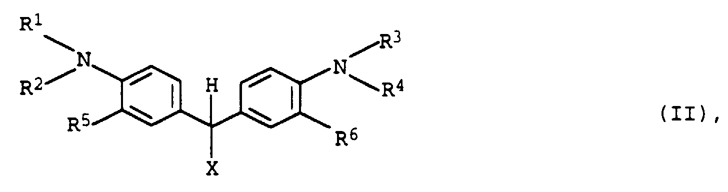 in der R¹, R², R³, R⁴, R⁵, R⁶ und X jeweils die obengenannte Bedeutung besitzen, in Gegenwart eines Verdünnungsmittels und eines Sauerstoff übertragenden Katalysators, der ein komplex gebundenes Schwermetallion enthält, oder eines Katalysators, enthaltend Molybdänsäure und Vanadium in Form von VO^{2⊕} -Ionen sowie in Form von fünfwertigen Verbindungen, vorteilhaft gelingt, wenn man als Oxidationsmittel Peroxomonoschwefelsäure oder deren Salze verwendet.

Alle in den obengenannten Formeln I und II auftretenden Alkylgruppen können sowohl geradkettig als auch verzweigt sein.

Wenn in den obengenannten Formeln I und II substituierte Alkylgruppen auftreten, so können als Substituenten z.B. Hydroxy, Chlor, Cyano, Phenyl oder Hydroxysulfonylphenyl in Betracht kommen.

Wenn in den obengenannten Formeln I und II substituierte Phenylgruppen auftreten, so können als Substituenten z.B. Methyl, Chlor, Amino, C₁-C₄-Mono- oder Dialkylamino, Mono- oder Diphenylamino, Hydroxy, C₁-C₄-Alkoxy oder Hydroxysulfonyl in Betracht kommen, wobei Hydroxysulfonyl als Substituent besonders zu nennen ist.

Wenn in der obengenannten Formel I substituierte Naphthylgruppen auftreten, so können als Substituenten z.B. Amino, C₁-C₄-Mono- oder Dialkylamino, Mono- oder Diphenylamino oder Hydroxysulfonyl in Betracht kommen.

Wenn in der obengenannten Formel substituierte Alkyl-, Phenyl- oder Naphthylgruppen auftreten, so sind sie in der Regel ein- bis dreifach, vorzugsweise ein- bis zweifach substituiert.

Geeignete Reste R¹, R², R³ und R⁴ sind z.B. Methyl, Ethyl, Propyl, Isopropyl, Butyl, Isobutyl, sec-Butyl, Pentyl, Isopentyl, Neopentyl, tert-Pentyl, Hexyl, Heptyl, Octyl, 2-Ethylhexyl, 2-Hydroxyethyl, 2- oder 3-Hydroxypropyl, 2- oder 4-Hydroxybutyl, 2-Chlorethyl, 2- oder 3-Chlorpropyl, 2- oder 4-Chlorbutyl, 2-Cyanoethyl, 2- oder 3-Cyanopropyl, 2- oder 4-Cyanobutyl, Benzyl, 1- oder 2-Phenylethyl, Hydroxysulfonylbenzyl, Hydroxysulfonylphenylethyl, 2-Methoxyethyl, 2-Ethoxyethyl, 2- oder 3-Methoxypropyl, 2- oder 3-Ethoxypropyl, 2- oder 4-Methoxybutyl, 2- oder 4-Ethoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 5-Hydroxy-3-oxapentyl, 5-Hydroxy-1,4-dimethyl-3-oxapentyl, 8-Hydroxy-3,6-dioxaoctyl, ll-Hydroxy-3,6,9-trioxaundecyl, Phenyl, 1-, 2- oder 3-Methylphenyl oder 1-, 2- oder 3-Ethylphenyl.

Geeignete Reste X sind z.B. Phenyl, 2-, 3- oder 4-Methylphenyl, 2,4-Dimethylphenyl, 2-, 3- oder 4-Chlorphenyl, 2,4- oder 2,6-Dichlorphenyl, 2-, 3- oder 4-Aminophenyl, 2-, 3- oder 4-Mono- oder Dimethylaminophenyl, 2-, 3- oder 4-Mono- oder Diphenylaminophenyl, 2-, 3- oder 4-Hydroxyphenyl, 2-, 3- oder 4-Methoxyphenyl, 2,4-Dimethoxyphenyl, 2-, 3- oder 4-Hydroxysulfonylphenyl, 2,4-Dihydroxysulfonylphenyl, 2,4-Dihydroxysulfonyl-5-hydroxyphenyl, Aminonaphthyl, Mono- oder Dimethylaminonaphthyl, Mono- oder Diphenylaminonaphthyl oder Hydroxysulfonylnaphthyl.

Geeignete Anionen sind z.B. Fluorid, Chlorid, Bromid, Iodid, Hydrogensulfat, Sulfat, Tetrafluoroborat, Formiat, Acetat, Propionat, Mono-, Di- oder Trichloracetat, Lactat, Methoxyacetat, Citrat, Succinat, Methylsulfonat, Benzolsulfonat oder 2- oder 4-Methylbenzolsulfonat.

Wenn die Farbstoffe der Formel I Hydroxysulfonylreste aufweisen und in Salzform vorliegen, kommen als Gegenionen Metall- oder Ammoniumionen in Betracht. Metallionen sind insbesondere die Lithium-, Natrium- oder Kaliumionen. Unter Ammoniumionen im erfindungsgemäßen Sinne sind entweder unsubstituierte oder substituierte Ammoniumkationen zu verstehen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch Hydroxylgruppen substituiert und/oder durch Sauerstoffatome in Etherfunktion unterbrochen sein kann.

Hervorzuheben sind Natrium- oder Kaliumionen.

Bevorzugt ist eine Verfahrensweise zur Herstellung von Farbstoffen der Formel I, in der R⁵ und R⁶ jeweils Wasserstoff bedeuten.

Weiterhin bevorzugt ist eine Verfahrensweise zur Herstellung von Farbstoffen der Formel I, in der R¹, R², R³ und R⁴ jeweils gegebenenfalls substituiertes C₁-C₄-Alkyl, insbesondere durch Hydroxy oder Hydroxysulfonylphenyl substituiertes C₁-C₄-Alkyl bedeuten.

Besonders bevorzugt ist eine Verfahrensweise zur Herstellung von Farbstoffen der Formel I, in der X Wasserstoff oder gegebenenfalls substituiertes Phenyl, insbesondere durch Chlor oder Hydroxysulfonyl substituiertes Phenyl bedeutet.

Weiterhin besonders bevorzugt ist eine Verfahrensweise zur Herstellung von Farbstoffen der Formel I, in der R¹, R², R³ und R⁴ jeweils C₁-C₄-Alkyl, C₂-C₄-Hydroxyalkyl oder Hydroxysulfonylbenzyl bedeuten.

Besonders hervorzuheben ist eine Verfahrensweise zur Herstellung von Farbstoffen der Formel I, in der R¹ und R³ jeweils Ethyl, R² und R⁴ jeweils Hydroxysulfonylbenzyl, R⁵ und R⁶ jeweils Wasserstoff und X durch Hydroxysulfonyl substituiertes Phenyl bedeuten.

Besonders technisches Interesse findet die Herstellung von C.I. Acid Blue 1 (42045), C.I. Acid Blue 3 (42051) oder C.I. Acid Blue 9 (42090) nach dem erfindungsgemäßen Verfahren.

Geeignete Katalysatoren, die Sauerstoff übertragen und ein komplex gebundenes Schwermetallion enthalten, stammen z.B. aus der Klasse der Porphyrine, Tetraaza[14]annulene, Phthalocyanine oder Tetraazacyclotetradecane.

Die komplex gebundenen Schwermetallionen leiten sich z.B. von Eisen, Mangan, Kobalt oder Chrom ab. Die Schwermetallionen sind in der Regel 2- oder 3-wertig.

Solche Verbindungen sind an sich bekannt und beispielsweise in der DE-A-2 427 606, WO-A-91/01985, Kontakte 1985, 38, oder in Chem. Lett. 1991, 1217, beschrieben.

Sie gehorchen beispielsweise den folgenden Formeln: 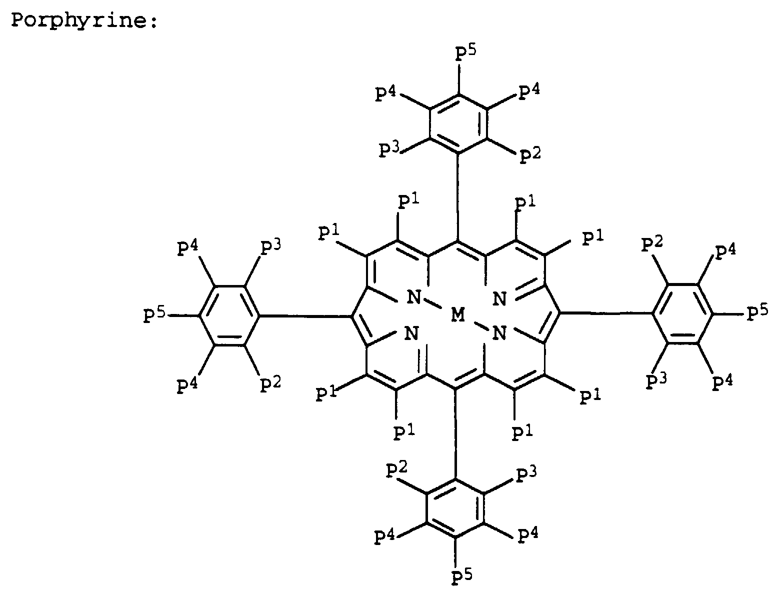
- P¹ =: Wasserstoff, Methyl, Ethyl, Chlor oder Brom
- P², P³, P⁴, P⁵ =: Wasserstoff, Methyl, Hydroxysulfonyl oder C₁-C₄-Alkoxy
- M =: Eisen, Mangan, Kobalt oder Chrom 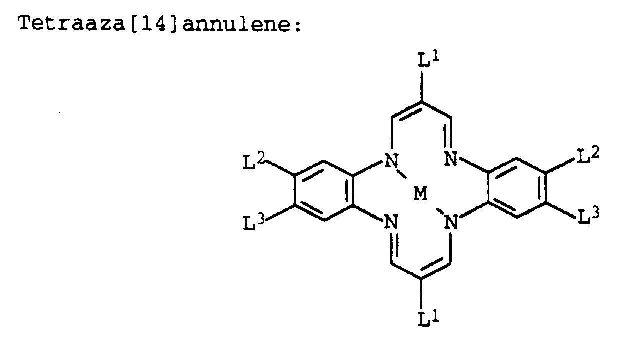
- L¹ =: Wasserstoff, C₁-C₈-Alkyl, Chlor, C₁-C₄-Alkoxy, gegebenenfalls substituiertes Phenyl, gegebenenfalls substituiertes Phenylazo, C₁-C₄-Alkoxycarbonyl oder gegebenenfalls durch C₁-C₄-Alkyl, Carboxyl, C₁-C₄-Alkoxycarbonyl oder Carbamoyl substituiertes Pyridylium
- L², L³ =: Wasserstoff, Methyl oder L² und L³ zusammen einen anellierten Benzoring
- M =: Eisen, Mangan, Kobalt oder Chrom 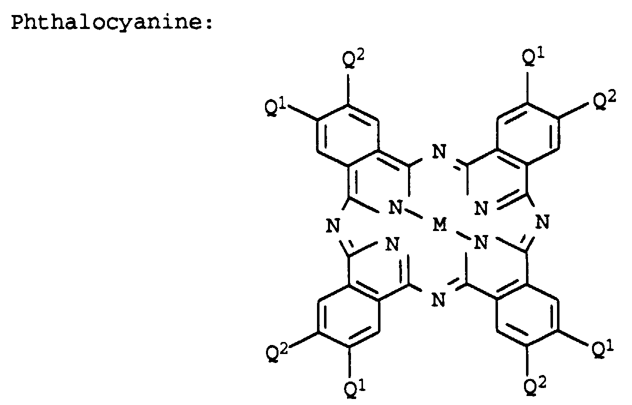
- Q¹, Q² =: C₁-C₄-Alkyl, Chlor, Brom, C₁-C₄-Alkoxy oder Q¹ und Q² zusammen einen anellierten Benzoring
- M: Eisen, Mangan, Kobalt oder Chrom 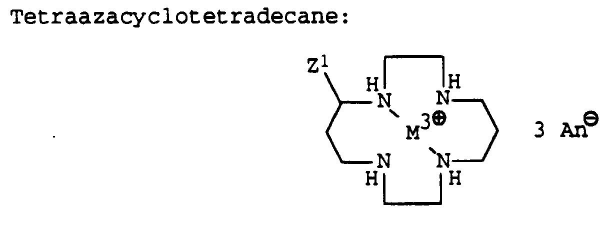
- Z¹ =: 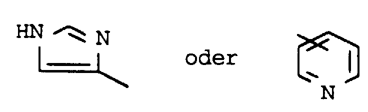
- An^{⊖} =: Äquivalent eines Anions
- M =: Eisen, Mangan, Kobalt oder Chrom

Bevorzugt ist die Verwendung von Katalysatoren aus der Klasse der Tetraaza[14]annulene oder Phthalocyanine.

Bevorzugt ist weiterhin die Verwendung von Katalysatoren, die ein komplex gebundenes Eisenion enthalten.

Besonders bevorzugt ist die Verwendung von Eisentetraaza[14]annulenen oder Eisenphthalocyaninen als Katalysatoren.

Insbesondere hervorzuheben ist die Verwendung von Eisen-5,14-dihydrodibenzo[b,i][5,9,14,18]tetraaza[14]annulen oder Eisenphthalocyanin als Katalysator.

Ein weiterer Katalysator, der im erfindungsgemäßen Verfahren zur Anwendung gelangen kann, enthält Molybdänsäure (H₂MoO₄) und Vanadium in Form von VO^{2⊕} -Ionen sowie in Form von fünfwertigen Verbindungen. Geeignete Gegenionen sind z.B. Halogenidionen, wie Fluorid, Chlorid oder Bromidionen oder Sulfat- oder Hydrogensulfationen.

Bezogen auf 1 mol Molybdänsäure, verwendet man in der Regel 0,2 bis 20 mol, vorzugsweise 1 bis 5 mol, an Vanadium-Katalysator.

Solche Katalysatoren sind an sich bekannt und z.B. in der US-A-4 321 207 beschrieben.

Die Katalysatoren können homogen oder heterogen in Lösung angewandt werden. Auch ihre Fixierung auf einem Trägermaterial, z.B. Kieselgel oder Ionenaustauscherharz, ist möglich.

Als Oxidationsmittel im erfindungsgemäßen Verfahren dienen Peroxomonoschwefelsaure oder vorzugsweise deren Salze, insbesondere deren Alkalisalze, wie Lithium-, Natrium- oder Kaliumperoxomonosulfat. Die Verwendung von Natrium- oder Kaliumperoxomonosulfat ist bevorzugt. Auch handelsübliche Mischungen von Kaliumperoxomonosulfat mit Kaliumhydrogensulfat und Kaliumsulfat sind anwendbar.

Je mol Leukoverbindung der Formel II verwendet man in der Regel 1,0 bis 1,5 mol, vorzugsweise 1,1 bis 1,3 mol und insbesondere 1,15 bis 1,25 mol an Alkaliperoxomonosulfat.

Der Katalysator wird im allgemeinen in einer Menge von 0,01 bis 10 mol-%, vorzugsweise 0,5 bis 7 mol-%, jeweils bezogen auf die Leukoverbindung II, angewandt.

Geeignete Verdünnungsmittel sind z.B. Wasser, Eisessig, Chloroform, Toluol, N,N-Dimethylformamid, N-Methylpyrrolidinon, Alkohole, wie Methanol, Ethanol, Propanol, Isopropanol, Butanol oder Isobutanol, Glykole, wie Ethylenglykol oder Propylenglykol, oder deren Gemische.

Vorzugsweise verwendet man Wasser oder Gemische von Wasser mit Eisessig, Alkoholen oder Glykolen.

Die Verwendung von Wasser als Verdünnungsmittel ist besonders hervorzuheben.

Zweiphasige Gemische, die z.B. aus der Anwendung von Wasser und einem nicht oder nur begrenzt mit Wasser mischbaren Lösungsmittel resultieren, werden zweckmäßig mit einem Phasentransferkatalysator versehen. Als Phasentransferkatalysatoren kommen dabei die üblichen, an sich bekannten Produkte, wie Tetraalkylammoniumhalogenide oder Benzyltrialkylammoniumhalogenide- oder hydrogensulfate in Betracht.

Das neue Verfahren wird in der Regel bei Normaldruck und einer Temperatur von 0 bis 100°C, vorzugsweise von 20 bis 40°C durchgeführt. Es kann sowohl in kontinuierlicher als auch diskontinuierlicher Arbeitsweise vorgenommen werden.

Man führt das neue Verfahren zweckmäßig so durch, daß man die Leukoverbindung II und Verdünnungsmittel vorlegt, wobei das Gewichtsverhältnis Leukoverbindung II : verdünnungsmittel in der Regel 1:10 bis 2:1, vorzugsweise 3:7 bis 3:2 beträgt. Danach gibt man den Katalysator zu und dosiert anschließend die Peroxomonoschwefelsäure oder deren Salze, gegebenenfalls als wäßrige Lösung, unter gutem Rühren zu dem Gemisch. Die Oxidation erfolgt dann unter Rühren bei der obengenannten Temperatur.

Nach einer Zeitdauer von 0 bis 2 Stunden, gemessen ab Zugabe des Oxidationsmittels, ist die Umsetzung in der Regel beendet, und man bringt das Reaktionsgemisch auf eine Temperatur von 20 bis 80°C. Das Zielprodukt kann dann auf üblichem Weg, z.B. durch Aussalzen mittels Natriumsulfat als Niederschlag abgetrennt und gegebenenfalls nochmals umgefällt werden.

Das erfindungsgemäße Verfahren ist einfach durchzuführen und liefert die Farbstoffe der Formel I in guter Ausbeute und hoher Reinheit. Weitere Vorteile des neuen Verfahrens sind die Verwendung eines schwermetallfreien Oxidationsmittels und eine kurze Reaktionszeit.

Bei den Farbstoffen der Formel I handelt es sich um wertvolle Farbstoffe zum Färben von Papier oder zur Anwendung im Sanitärbereich.

Die folgenden Beispiele sollen die Erfindung näher erläutern.

### Beispiel 1

Zu 81,4 g (50 mmol) einer 47,3 gew.-%igen wäßrigen Lösung von 4',4"-Bis[N-ethyl-N-(3-hydroxysulfonylbenzyl)amino]triphenylmethan-2-sulfonsäure-Natriumsalz wurden 0,34 g (1 mmol) Eisen-5,14-dihydrodibenzo[b,i][5,9,14,18]tetraaza[14]annulen gegeben und eine Lösung von 18,4 g (60 mmol) Kaliumperoxomonosulfat in 100 ml Wasser unter kräftigem Rühren innerhalb von 25 Minuten bei Raumtemperatur zugetropft. Nach einstündigem Rühren bei Raumtemperatur wurde die Lösung filtriert und anschließend auf 75°C erwärmt. Durch Zugabe von Natriumsulfat wurde der Farbstoff ausgesalzen und heiß von der wäßrigen Phase abgetrennt. Das Farbharz wurde in Wasser gelöst. Die Lösung wurde mit Natronlauge auf einen pH-Wert von 4 eingestellt. Nach Abziehen des Wassers und anschließender Trocknung wurden 42,8 g salzhaltiger Farbstoff erhalten.

### Beispiel 2

Zu 96,3 g (50 mmol) einer 40 gew.-%igen wäßrigen Lösung von 4',4"-Bis[N-ethyl-N-(3-hydroxysulfonylbenzyl)amino]triphenylmethan-2-sulfonsäure-Natriumsalz wurden bei Raumtemperatur 0,51 g (1 mmol) Eisenphthalocyanin gegeben und eine Lösung von 18,4 g (60 mmol) Kaliumperoxomonosulfat in 100 ml Wasser unter kräftigem Rühren zugetropft. Nach einstündigem Rühren der Lösung bei Raumtemperatur erfolgte die Aufarbeitung wie in Beispiel 1 beschrieben. Es wurden 39,6 g salzhaltiger Farbstoff erhalten.

### Beispiel 3

Zu 96,3 g (50 mmol) einer 40 gew.-%igen wäßrigen Lösung von 4',4"-Bis[N-ethyl-N-(3-hydroxysulfonylbenzyl)amino]triphenylmethan-2-sulfonsäure-Natriumsalz wurden bei Raumtemperatur 2,4 g Vanadiumkatalysator und 7,4 g Molybdänsäure, die analog Example 1 und 2 der US-A-4 321 207 hergestellt wurden, gegeben und eine Lösung von 18,4 g (60 mmol) Kaliumperoxomonosulfat in 100 ml Wasser unter kräftigem Rühren zugetropft. Nach einstündigem Rühren der Lösung bei Raumtemperatur erfolgte die Aufarbeitung wie in Beispiel 1 beschrieben. Es wurden 38,2 g salzhaltiger Farbstoff erhalten.

Analog den voranstehenden Beispielen lassen sich die Leukoverbindungen der Formel 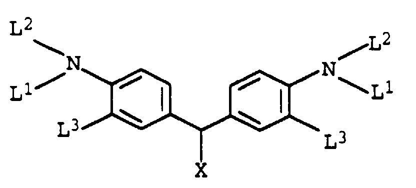 oxidieren.

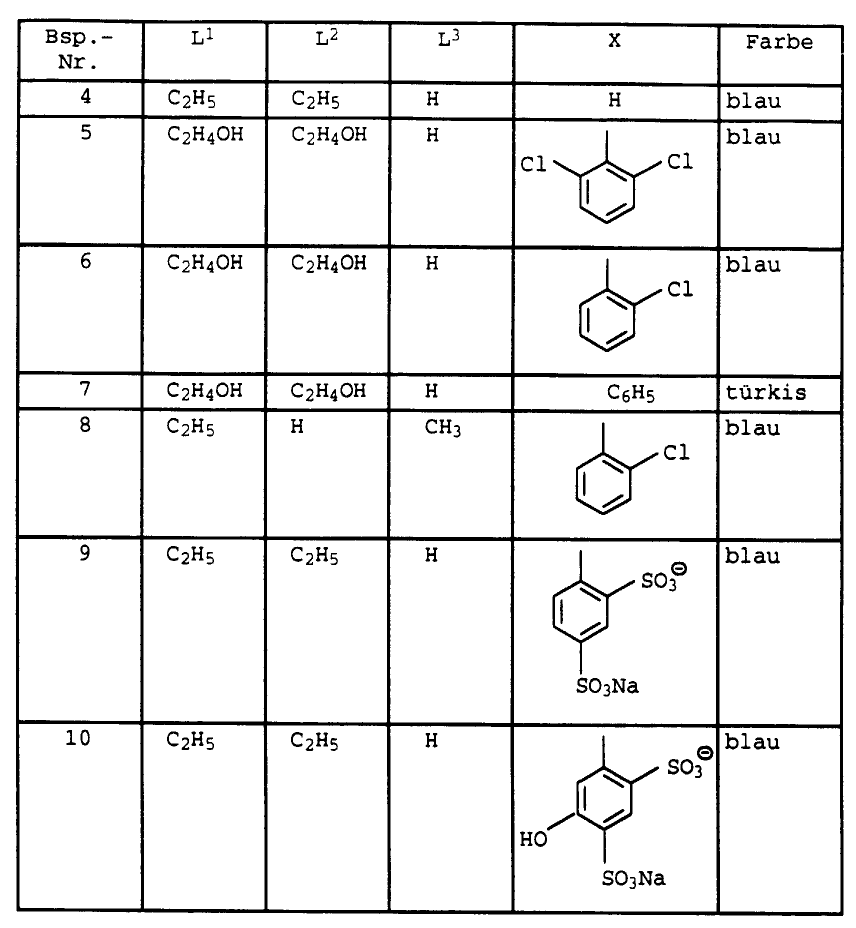

## Patentansprüche

1. Verfahren zur Herstellung von Farbstoffen der Formel I 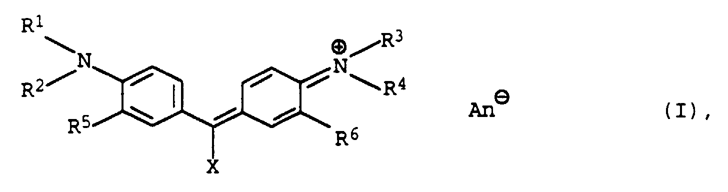 in der
R¹, R², R³ und R⁴ unabhängig voneinander jeweils C₁-C₈-Alkyl, das gegebenenfalls substituiert ist und durch 1 bis 3 Sauerstoffatome in Etherfunktion unterbrochen sein kann, Phenyl oder C₁-C₄-Alkylphenyl,
R⁵ und R⁶ unabhängig voneinander jeweils Wasserstoff oder Methyl,
X Wasserstoff, gegebenenfalls substituiertes Phenyl oder gegebenenfalls substituiertes Naphthyl und
An^{⊖} das Äquivalent eines Anions bedeuten,
durch Oxidation einer Leukoverbindung der Formel II 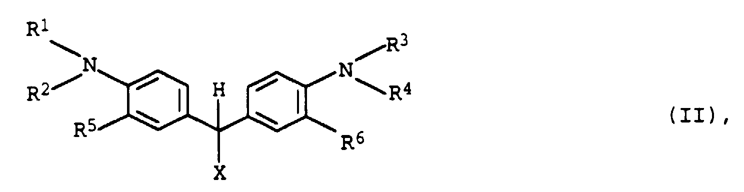 in der R¹, R², R³, R⁴, R⁵, R⁶ und X jeweils die obengenannte Bedeutung besitzen, in Gegenwart eines Verdünnungsmittels und eines Sauerstoff übertragenden Katalysators, der ein komplex gebundenes Schwermetallion enthält, oder eines Katalysators, enthaltend Molybdänsäure und Vanadium in Form von VO^{2⊕} -Ionen sowie in Form von fünfwertigen Verbindungen, dadurch gekennzeichnet, daß man als Oxidationsmittel Peroxomonoschwefelsäure oder deren Salze verwendet.

2. Verfahren nach Anspruch 1, dadurch gekennzeichnet, daß R⁵ und R⁶ jeweils Wasserstoff bedeuten.

3. Verfahren nach Anspruch 1, dadurch gekennzeichnet, daß R¹, R², R³ und R⁴ jeweils gegebenenfalls substituiertes C₁-C₄-Alkyl bedeuten.

4. Verfahren nach Anspruch 1, dadurch gekennzeichnet, daß X Wasserstoff oder gegebenenfalls substituiertes Phenyl bedeutet.

5. Verfahren nach Anspruch 1, dadurch gekennzeichnet, daß der Sauerstoff übertragende Katalysator aus der Klasse der Porphyrine, Tetraaza[14]annulene, Phthalocyanine oder Tetraazacyclotetradecane stammt.

6. Verfahren nach Anspruch 1, dadurch gekennzeichnet, daß sich das im Sauerstoff übertragenden Katalysator komplex gebundene Schwermetallion von Eisen, Mangan, Kobalt oder Chrom ableitet.

## Claims

1. A process for preparing dyes of the formula I 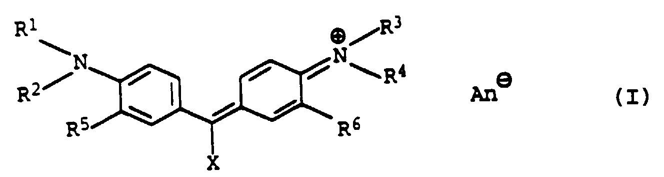 where
R¹, R², R³ and R⁴ are independently of one another C₁-C₈-alkyl, which may be substituted and may be interrupted by from 1 to 3 oxygen atoms in the ether function, phenyl or C₁-C₄-alkylphenyl,
R⁵ and R⁶ are independently of one another hydrogen or methyl,
x is hydrogen, substituted or unsubstituted phenyl or substituted or unsubstituted naphthyl, and
An^{⊖} is the equivalent of an anion,
by oxidation of a leuco compound of the formula II 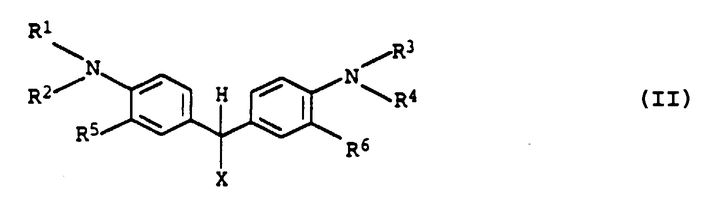 where R¹, R², R³, R⁴, R⁵, R⁶ and X are each as defined above, in the presence of a diluent and of an oxygen transfer catalyst which contains a complexed heavy metal ion, or of a catalyst comprising molybdenic acid and vanadium in the form of VO^{2⊕} ions or pentavalent compounds, which comprises using as oxidizing agent peroxomonosulfuric acid or a salt thereof.

2. A process as claimed in claim 1, wherein R⁵ and R⁶ are each hydrogen.

3. A process as claimed in claim 1, wherein R¹, R², R³ and R⁴ are each substituted or unsubstituted C₁-C₄-alkyl.

4. A process as claimed in claim 1, wherein X is hydrogen or substituted or unsubstituted phenyl.

5. A process as claimed in claim 1, wherein the oxygen transfer catalyst is a member of the class of the porphyrins, tetraaza[14]annulenes, phthalocyanines or tetraazacyclotetradecanes.

6. A process as claimed in claim 1, wherein the heavy metal ion complexed within the oxygen transfer catalyst is derived from iron, manganese, cobalt or chromium.

## Revendications

1. Procédé de préparation de colorants de formule I 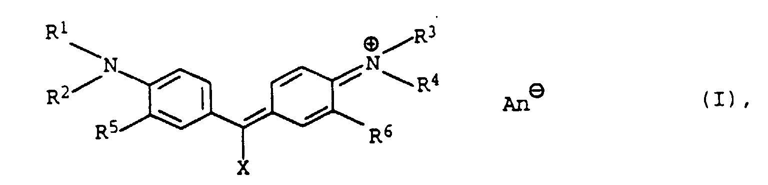 dans laquelle
R¹, R², R³ et R⁴ représentent chacun, indépendamment les uns des autres, un reste alkyle en C₁-C₈ qui est éventuellement substitué et peut être interrompu par 1 à 3 atomes d'oxygène en fonction éther, un reste phényle ou un reste (alkyl en C₁-C₄)phényle,
R⁵ et R⁶ représentent chacun, indépendamment l'un de l'autre, un atome d'hydrogène ou un reste méthyle,
X représente un atome d'hydrogène, un reste phényle éventuellement substitué ou naphtyle éventuellement substitué et
An^{⊖} représente l'équivalent d'un anion,
par oxydation d'un composé leuco de formule II 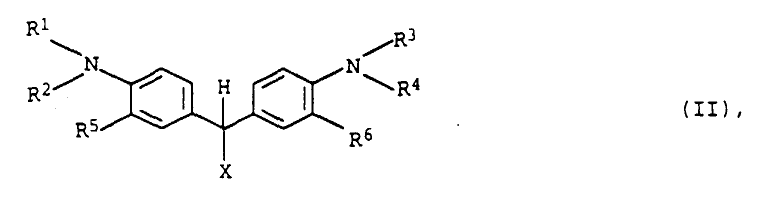 dans laquelle R¹, R², R³, R⁴, R⁵, R⁶ et X ont chacun la signification donnée ci-dessus, en présence d'un diluant et d'un catalyseur véhiculant de l'oxygène qui contient un ion de métal lourd complexé, ou d'un catalyseur contenant de l'acide molybdique et du vanadium sous forme d'ions VO^{2⊕} ainsi que sous forme de composés pentavalents, caractérisé en ce que l'on utilise, comme oxydant, de l'acide peroxomonosulfurique ou des sels de celui-ci.

2. Procédé selon la revendication 1, caractérisé en ce que R⁵ et R⁶ représentent chacun un atome d'hydrogène.

3. Procédé selon la revendication 1, caractérisé en ce que R¹, R², R³ et R⁴ représentent chacun un reste alkyle en C₁-C₄ éventuellement substitué.

4. Procédé selon la revendication 1, caractérisé en ce que X représente un atome d'hydrogène ou un reste phényle éventuellement substitué.

5. Procédé selon la revendication 1, caractérisé en ce que le catalyseur véhiculant de l'oxygène provient de la classe des porphyrines, des tétraaza[14]annulènes, des phtalocyanines ou des tétraazacyclotétradécanes.

6. Procédé selon la revendication 1, caractérisé en ce que l'ion de métal lourd complexé dans le catalyseur véhiculant de l'oxygène dérive du fer, du manganèse, du cobalt ou du chrome.
